# EUROPEAN PATENT APPLICATION

(11) **EP 1 782 880 A1**
(43) Date of publication of application: **09.05.2007**
(21) Application number: 05077536.0
(22) Date of filing: 04.11.2005
(51) Int. Cl.: B01D 71/02, B01D 67/00

(54) **Ceramic membrane, its preparation and use**

(71) Applicant: UNIVERSITEIT TWENTE, 7522 NB Enschede (NL)
(72) Inventor: Van Gestel, Tim Juul Julia, 2490 Balen (BE); Kruidhof, Hendrik, 7552 KK Hengelo (NL); Bouwmeester, Henricus Johannes Maria, 7577 AA Oldenzaal (NL); Blank, David Hermanus Adrianus, 7511 DP Enschede (NL)
(74) Representative: Prins, Hendrik Willem

(57) **Abstract**

The invention relates to a method for preparing a ceramic microporous membrane made of ZrO₂ and/or TiO₂ on a support membrane, comprising the steps of:
i) forming a polymeric solution comprising polymeric ZrO₂ particles, TiO₂ particles and mixtures thereof, an alcohol amine and a solvent;
ii) applying the polymeric solution on the support membrane; and
iii) drying and firing the support membrane applied with the polymeric solution, thereby forming the microporous membrane on the support membrane, to the obtainable ceramic membrane and to its use.

## Description

The present invention relates to novel thermally and chemically stable ceramic microporous membranes, to a method for preparing these membranes and to the use of these membranes in liquid separation processes.

Liquid separation processes are widely practiced in a number of technological fields. Frequently, the separation of a mixture of liquids is achieved by distillation, but especially at lower concentrations of the minor compound, this is a relatively expensive technique.

When the liquid mixture has a relative volatility of 1 and forms an azeotropic mixture or also in the case when it has close-boiling components, efficient separation is also not possible by conventional distillation and a third compound, an entrainer, has to be added. A drawback of using this type of distillation processes is that additional separation steps are required to recover the entrainer and that a great deal of energy is consumed.

Moreover, in many cases, there is no suitable entrainer available and other separation techniques must be used like, for example, adsorption or extraction. A drawback of such techniques is the fact that they frequently require also a great deal of energy and significant investment and maintain cost. From an energy, environmental and cost point of view, the replacement of a traditional liquid separation unit by a membrane, more specifically a pervaporation membrane, is proven to be very beneficial.

Frequently, the membrane employed in a pervaporation device consists of a polymeric material having the significant disadvantages in that the thermal and chemical stability of the material is restricted. As an alternative for the polymeric membranes, microporous ceramic membranes have been developed, but problems with too strong acid or alkaline liquids are encountered in such membranes. It is the object of the present invention to provide a thermally stable microporous ceramic membrane suitable for separating liquid mixtures. This membrane shows a high chemical stability with respect to all types of organic liquids and to acid and alkaline liquids.

A substantial amount of work has already been done in the field of the development of membranes which can be applied for pervaporation. These membranes are generally classified into organic polymeric membranes and inorganic ceramic membranes, among which polymeric membranes represent the main group in both the commercial industrial field and the academic field. A considerable number of studies has been published in the literature reporting the preparation of polymeric membranes and describing their performance for a number of organic solvent/water and organic solvent/organic solvent separations. Initially, membrane materials prepared were simple hydrophilic or hydrophobic polymers such as, for example, polyvinyl alcohol or rubbery polymers. These membranes have found application at an industrial scale in the dehydration of alcohols, containing a small amount of water, and in the separation of small amounts of organic compounds from water.

An important problem hindering the development of pervaporation processes as a viable alternative to distillation in a larger number of applications was the lack of polymeric membranes able to withstand sustained exposure to aggressive organic liquids, especially at higher temperatures. Later, a lot of research has been done on the development of more advanced polymeric membranes with improved properties. Research has been focused, for example, on improving the flux and the selectivity, but also on the solvent stability and the corrosion resistance of the membranes for certain applications.

A number of advanced membranes have been proposed with a potential for more advanced pervaporation applications, but also these membranes do not cover a wide range of solvents and/or acid and alkaline liquids and there are still a number of restrictions to the feed mixtures that can be handled.

Microporous ceramic membranes made from zeolite or SiO₂ have been proposed as an alternative for polymeric pervaporation membranes, because they have some well-known advantages including a greater chemical and thermal stability and a significantly longer service-life. They can operate reliably in all types of organic solvents, due to the inorganic nature of the membrane material, and temperatures up to 250°C can be handled.

Reported is the performance of both academic-scale and commercially available zeolite membranes for pervaporation applications. Some of these membranes show an extremely narrow pore size distribution around 0.5 nm and can separate very effectively water from all types of organic solvents. Also mixtures of organic solvents, for example benzene/cyclohexane, have been successfully separated with zeolite membranes.

Microporous SiO₂ pervaporation membranes are similar to well-known SiO₂ gas separation membranes and have been introduced on the market a few years ago. The membranes comprise of a microporous SiO₂ membrane layer with a pore size of for instance 0.4 nm, which is applied on a mesoporous carrier made of γ-Al₂O₃, by a polymeric sol-gel procedure. Since they appeared, these membranes have found increasing attention, especially, because they offer a rather good separation factor in combination with a relatively high flux. The main drawback of commercially available zeolite and SiO₂ pervaporation membranes, which have been introduced as alternatives for polymeric membranes, is, however, their limited resistance to acid and alkaline liquids.

In order to improve this resistance, SiO₂ membranes with ZrO₂ or TiO₂ added as a second component have been proposed, but membranes with a demonstrable improved corrosion resistance and having a pore size suitable for use in pervaporation have not been described or obtained.

The present invention relates to novel microporous ceramic membrane layers, which can be applied for pervaporation, and to methods for their production. In particular, the invention provides microporous membrane layers made of ZrO₂ and/or TiO₂, displaying a high thermal stability, a chemical stability in all types of organic solvents and in acid and alkaline liquids and a good separation efficiency in pervaporation. The invention furthermore relates to a method for preparing such microporous membrane layers according to a polymeric sol-gel dip-coating method, in which an alcohol amine is applied as a modifier and as a coating and drying controlling additive preparing.

Accordingly, the invention provides a method for preparing a ceramic microporous membrane made of ZrO₂ and/or TiO₂ on a support membrane, comprising the steps of:
i) forming a polymeric solution comprising polymeric ZrO₂ particles, TiO₂ particles and mixtures thereof, an alcohol amine and a solvent;
ii) applying the polymeric solution on the support membrane; and
iii) drying and firing the support membrane applied with the polymeric solution, thereby forming the microporous membrane on the support membrane.

The method of the invention is simple in procedure, in required chemicals, in application method (dip-coating) and in conventional utilities (drying and firing oven). The method is similar for using Zr-precursor, Ti-precursor or both.

Examples of suitable alcohol amines are mono-, di-, and/or trialcohol amine having a C₁-C₅ alkyl chain, preferably a C₂-C₃ alkyl chain.

Preferably, the alcohol amine is monoethanol amine, diethanol amine and/or triethanol amine, preferably diethanol amine.

Any suitable solvent may be used, such as alcohols, hydrocarbons (benzene and hexane), methyl ethyl keton and acetic acid.

The polymeric ZrO₂ particles, TiO₂ particles and mixtures thereof may be formed by polymeric sol preparation from a precursor solution. Such precursor solution comprises as a precursor a metal alkoxide of formula (1)

M(OCₙH₂ₙ₊₁)₄,

and/or alkylated metal alkoxide of formula (2)

MRₓ(OCₙH₂ₙ₊₁)₄₋ₓ,

wherein:
M= Zr and/or Ti
n= 1 to 5
R= C₁-C₈-alkyl
x= 1 or 2

Preferably, the metal alkoxide may be ethoxide or butoxide. Alkoxides derived from ethanol, propanol and butanol may be used as well. The alkyl group may be straight or branched. When used as a mixture, the ratio between the Zr-alkoxide and Ti-alkoxide varies between 0.9 and 0.1, preferably the Zr-alkoxide is the predominant component and preferably present in a percentage varying from 60-99%, such as 70-95%.

In relation to the alkylated metal alkoxide it is preferred that one or two alkyl groups may be present with preferably a C₂ or C₃ alkyl group.

As a support for the microporous membrane, a mesoporous membrane made of γ-Al₂O₃, ZrO₂, TiO₂ or a combination of these materials can be used. In a preferred preparation method, diethanol amine is added to a solution of a zirconia and/or titania precursor, after which a sol containing nanometer-sized particles of these materials can be obtained. A stable microporous membrane layer comprising ZrO₂ and/or TiO₂ can be made by dip-coating these structures on the carrier, followed by a drying and firing process in air. Preferably, such coatings are fired at a temperature of 400°C or higher. The firing temperature normally ranges from 350-750°C, preferably 400-600°C. In order to avoid cracking or breakage of the microporous membrane it is preferred to add a pore growth restricting agent, such as an yttrium compound. Accordingly, it is preferred that the polymeric solution comprises an yttrium compound as a pore growth restricting agent. When the yttrium compound is added to the precursor solution then a preferred yttrium compound is yttrium alkoxide of formula (3)

Y(OCₙH₂ₙ₊₁)₃.

wherein n =1 to 8, preferably 2-4.

The polymeric solution then contains an yttrium compound as a dopant, which restricts pore growth during firing at the desired temperatures. The membrane layers prepared in this manner show a small pore size suitable for pervaporation applications, a high thermal and a high chemical stability.

The polymeric solution may be applied by the known gel dip coating method. Other methods for applying the polymeric solution may be used provided that the intended thickness and/or amount of polymeric solution is applied.

It is preferred that the ceramic microporous membrane is applied on a support membrane which is a mesoporous membrane comprising γ-Al₂O₃, TiO₂ and/or ZrO₂.

Another aspect of the present invention relates to ceramic microporous membranes obtainable by the method according to the invention. Similarly, the present invention relates to ceramic membranes comprising a microporous membrane applied on a support membrane,

Finally, another aspect of the invention is the use of such ceramic microporous membranes and ceramic membranes according to the invention, particular in the liquid separation processes.

Mentioned and other features of the present invention will be further discussed in detail with reference to the annexed drawing and the following examples. However, it will be understood that the drawing and the examples are given for illustration purposes and are not intended to restrict the present invention to any extent.

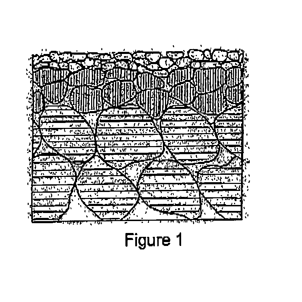

In the drawing, figure 1 is a schematic cross-sectional view of a ceramic membrane according to the invention comprising a ceramic microporous membrane (layer 1) applied on the support membrane.

Referring to the figure 1, layer 1 is a microporous membrane layer, having a pore size smaller than 1 nm and a thickness in the range 30 - 200 nm. Layer 2 is a mesoporous carrier, preferably having a pore size in the range 2 to 10 nm and a thickness less than 10 µm. This layer is present on the surface of a porous support material 3, generally having a thickness of a few millimeters. The support material 3 may be present in all common configurations such as a flat, a tubular or a multichannel monolithic configuration and in the case of a tubular configuration, layer 2 can be present at the inside or outside surface.

Methods for preparing the support material 3 and layer 2 have been developed by various manufacturers and are well-known. The support material 3 is generally made of γ-Al₂O₃, by means of a conventional ceramic powder technique. Also other common support materials, such as TiO₂, ZrO₂, SiO₂ or a metal compound, can be used rather than γ-Al₂O₃. Layer 2 is generally made of γ-Al₂O₃, TiO₂, ZrO₂ or a combination of these materials, by means of a colloidal sol-gel dip-coating procedure.

Layer 1 is the active pervaporation layer of the membrane. Most preferably, layer 1 is made of ZrO₂ or TiO₂ or a combination of these materials. The especially preferred preparation method a polymeric sol-gel dip-coating method followed by a thermal treatment at a temperature of 400°C or higher, starting from a zirconium or titanium sol-gel precursor, which is modified by chelation with a slowly hydrolyzing ligand.

In order to obtain a microporous material with a pore size smaller than 1 nm, a sol comprising of nanometer-sized particles is required. Generally, precursor modifying ligands that find use in sol-gel processing, such as acetylacetone, carboxylic acids, alcohol amines, and the like, can be used to provide such as a sol. In the present invention, a polymeric sol-gel dip-coating procedure with an alcohol amine as precursor modifier is proposed as a suitable preparation route for a pervaporation membrane layer.

It has been found that the preparation of ZrO₂ and TiO₂ membranes for pervaporation or gas separation, starting from precursor modified polymeric sols, fails, not because these sols do not contain the required nanometer sized particles, but rather due to the poor quality of the coated membrane layer. This failure may be due to the unfavorable layer formation and the strong tendency for cracking in the sol-gel dip-coating procedure. Binders or other large molecular weight organic additives can not be added, because these compounds create too large voids in the coated layer after the firing process. The novel membrane of the invention can be made, because of an improvement in the coating, drying and firing processes is obtained by incorporating an alcohol amine in the sol. Clearly, the precursor modifying additive can also impart the ideal coating properties to the sol and prevent the formation of cracks during the critical drying process.

A suitable polymeric sol preparation route for the membrane of the invention is as follows. A polymeric sol containing nanometer-sized zirconia, titania or mixed zirconia-titania polymeric structures is prepared starting from a Zr and/or Ti metal-organic precursor. The precursor is a metal-alkoxide, M(OCₙH₂ₙ₊₁)₄, or an alkylated metal-alkoxide, MRₓ(OCₙH₂ₙ₊₁)₄₋ₓ, wherein M = Zr or Ti, R is an organic ligand, n = 1 to 8 and x = 1 to 2. The most preferred are commercially available simple metal-alkoxides with n = 2 to 4. The metal-organic precursor can be dissolved in any suitable organic solvent, including aliphatic and aromatic hydrocarbons, alcohols, organic acids, ketones and in mixtures of such solvents. Preferably, the solvent is a lower alcohol, CₙH₂ₙ₊₁OH, with n = 1 to 8 and the most preferred are those with n = 2 to 4.

The alcohol amine is added to the precursor solution, prior to the hydrolyis reaction, with the molar ratio of alcohol amine to precursor in the range 0.2 to 3.0. The most appropriate sols for dip-coating are obtained by reacting the precursor with 1 to 15 moles of H₂O in the presence of diethanol amine as a modifier and with or without the presence of a mineral acid, such as HNO₃. Alternatively, also other alcohol amines, such as monoethanol amine and triethanol amine can be used. It would also be possible to use mono-, di- and tri-alcohol amines comprising a longer alkyl chain.

The size of the polymeric structures consisting of zirconia and/or titania in the sols, prepared in this manner, is in the range 3 to 15 nm and will usually not exceed 10 nm.

An especially preferred preparation method, which provides reproducible formation of smooth and crack-free membrane layers, involves first preparing a sol from a Zr- and/or Ti-alkoxide precursor, alcohol as a solvent, diethanol amine and 5 - 10 mole of H₂O. The water may be acidified or not acidified at all. The sol is then coated on the surface of a mesoporous carrier. The layer can be dried in ambient air and converted into a stable microporous membrane layer consisting of ZrO₂ and/or TiO₂ by a conventional firing treatment. A firing temperature of 400°C or higher is preferred, to give a toplayer with a sufficient thermal stability. It has also become apparent that such a firing treatment provides a chemically stable microporous layer, which can be properly used in a pH range from 1 to 13. Alternatively, the coated layer may also be dried at higher temperatures and/or with forced air circulation over the surface.

In an alternative membrane preparation procedure, which is even more preferred, a doping material is incorporated in the coated layer to retard grain growth during firing at the desired temperatures. A similar polymeric sol-gel dip-coating method can be used to prepare such a coating. In this method as a doping material an yttrium compound, is introduced into the sol. A preferred procedure involves the preparation of a doped polymeric sol starting from a mixture of a Zr- and/or Ti-alkoxide and an Y-alkoxide, Y(OCₙH₂ₙ₊₁)₃, dissolved in a lower alcohol. Alternatively, it would also be possible to add the Y-alkoxide as a doping material to the above described polymeric sol prior to the dip-coating procedure. It is also possible to add an yttrium salt as a doping material.

### Examples

### Example 1

### Separation of isopropanol and water with an Y-doped ZrO₂ membrane

A polymeric ZrO₂ sol was prepared in a glove box with He-atmosphere starting from Zr(OC₃H₇)₄, Y(OC₃H₇)₃ and diethanol amine (DEA), with the yttrium compound as the dopant and DEA as the precursor modifier. The modified precursor was hydrolysed by adding 7.14 mole of H₂O at ambient temperature. The H₂O was acidified by adding HNO₃ until a 1 M HNO₃ solution was obtained, prior to the hydrolysis reaction. In the sol preparation, the molar ratio of the components Zr(OC₃H₇)₄, Y(OC₃H₇)₃, DEA, H₂O and n-C₃H₇OH was 1.00:0.058:1.78:7.14:0.09, respectively. The particle size of the resultant sol measured ca. 5 nm in dynamic laser beam scattering, with a very narrow size distribution, and the sol was found to be stable for several months. The dip-coating procedure was carried out in a class 100 clean-room under a constantly flowing air-stream.

First, the sol was diluted by adding a volume of n-C₃H₇OH, equal to half the volume of the sol. Then, the diluted sol was contacted with a mesoporous γ-Al₂O₃ membrane with an average pore size in the range 3 - 5 nm during 15 s. State of the art mesoporous membranes, prepared by colloidal sol-gel dip-coating procedures on porous γ-Al₂O₃ support disks with a diameter of 39 mm and a thickness of 2 mm, were used as used as a carrier for the coating. The coating was allowed to dry for a few minutes and the coated carrier was subsequently placed in an oven and fired at 500°C in air for 2 hours. The temperature was increased by 0.5°C/min to 500°C and decreased by 0.5°C/min to room temperature. If necessary, the quality of the resultant ZrO₂ membrane layer was improved by repeating the sol-gel dip-coating and firing procedure.

The prepared membranes were tested for their quality in a pervaporation test with a water/isopropanol mixture. In a representative test, a feed stream containing 95 % of isopropanol and 5% of water could be converted into a permeate stream containing 5 % of isopropanol and 95 % of water by using the prepared membranes at an operation temperature of 70°C.

### Example 2

### Separation of isopropanol and water with an Y-doped TiO₂ membrane

A polymeric TiO₂ sol was prepared in a similar manner as described in Example 1 starting from Ti(OC₃H₇)₄, Y(OC₃H₇)₃, diethanol amine (DEA) and 1 M HNO₃, with the yttrium compound as the dopant and DEA as the precursor modifier. In the sol preparation, the molar ratio of the components Ti(OC₃H₇)₄, Y(OC₃H₇)₃, DEA, H₂O and n-C₃H₇OH was 1:0.04:1.4:5:85, respectively. The properties of the resultant TiO₂ sol were similar to those described for the ZrO₂ sol in Example 1. Then, a similar dip-coating procedure could be used, with a mesoporous γ-Al₂O₃ membrane with an average pore size in the range 3 - 5 nm as a carrier, followed by a similar drying and firing procedure. In a representative test, the properties of this type of membrane were also found similar to the properties of the ZrO₂ membrane: a feed stream containing 95 % of isopropanol and 5% of water could be converted into a permeate stream containing 5 % of isopropanol and 95 % of water by using the prepared membranes at an operation temperature of 70°C.

### Example 3

### Preparation of Y-doped membranes with an yttrium salt

Another possible preparation rmethod of the Y-doped membranes consisting of ZrO₂ or TiO₂ starts with the synthesis of a polymeric zirconia or titania sol in its undoped form. In the sol preparation, Y(NO₃)₃.6H₂O was added to the resultant polymeric sol as the yttrium compound and the molar ratio of Y(NO₃)₃.6H₂O and precursor was the same as for Y(OC₃H₇)₃ and precursor. A similar membrane as described in Example 1 and 2 was obtained according to the same dip-coating, drying and firing procedure, with a mesoporous γ-Al₂O₃ membrane with an average pore size in the range 3 - 5 nm as a carrier.

### Example 4

### Preparation of membranes without doping material.

Polymeric sols were prepared in their undoped form starting from Zr(OC₃H₇)₄, Ti(OC₃H₇)₄ and a mixture of Zr(OC₃H₇)₄ and Ti(OC₃H₇)₄ in a similar way as described in Examples 1 and 2. An undoped form of the membrane containing ZrO₂, TiO₂ or a mixture of these compounds could be obtained according to the same dip-coating, drying and firing procedure, by using one of the resultant sols and a mesoporous γ-Al₂O₃ membrane with an average pore size in the range 3 - 5 nm as a carrier.

### Example 5

### Preparation of a membrane for application in strong acid and alkaline feed mixtures

A second type of membrane configuration that is more preferred for application in a mixture comprising an aggressive aqueous component is achievable by depositing the membranes described in Example 1 - 4 on a ZrO₂ or TiO₂ membrane as a carrier. Membranes having a microporous ZrO₂ and TiO₂ toplayer, deposited on mesoporous ZrO₂ and TiO₂ membranes with an average pore size of 3 - 4 nm, respectively, were successfully tested in long-term nanofiltration tests with corrosive aqueous HNO₃ and NaOH feed solutions having a pH in the range 1 -13. In these tests the corrosive feed solutions were permeated under a pressure of 5 - 7 bar through the membranes. Starting from a ZrO₂ or TiO₂ membrane as a carrier, a similar dip-coating, drying and firing procedure could be used as described in the previous Examples, resulting in a membrane with a potential for application in acid and alkaline feed mixtures.

## Claims

1. Method for preparing a ceramic microporous membrane made of ZrO₂ and/or TiO₂ on a support membrane, comprising the steps of:
iv) forming a polymeric solution comprising polymeric ZrO₂ particles, TiO₂ particles and mixtures thereof, an alcohol amine and a solvent;
v) applying the polymeric solution on the support membrane; and
vi) drying and firing the support membrane applied with the polymeric solution, thereby forming the microporous membrane on the support membrane.

2. Method as claimed in claim 1, wherein the alcohol amine is a mono-, di-, and/or trialcoholamine having a C₁-C₅ alkyl chain, preferably a C₂-C₃ alkyl chain.

3. Method as claimed in claim 2, wherein the alcohol amine is monoethanol amine, diethanol amine and/or triethanol amine, preferably diethanol amine.

4. Method as claimed in claim 1-3, wherein the polymeric ZrO₂ particles and/or TiO₂ particles are formed by polymeric sol preparation from a precursor solution comprising as a precursor a metal alkoxide of formula (1)
M(OCₙH₂ₙ₊₁)₄,
and/or alkylated metal alkoxide of formula (2)
MRₓ(OCₙH₂ₙ₊₁)₄₋ₓ,
wherein:
M= Zr and/or Ti
n= 1 to 5
R= C₁-C₈-alkyl
x= 1 or 2

5. Method as claimed in claim 4, wherein
n = 2-4

6. Method as claimed in claim 4 or 5 wherein
n = 2 or 4
R = C₂ or C₃
x= 1

7. Method as claimed in claim 4-6, wherein the precursor solution is subjected to a hydrolysis reaction, preferably an acidic hydrolysis reaction.

8. Method as claimed in claim 7, wherein the molar ratio of metal alkoxide of formula (1) and/or alkylated metal alkoxide of formula (2) to water is 1 to 15, preferably 5 to 10.

9. Method as claimed in claim 1-8 comprising a precursor modifying ligand.

10. Method as claimed in claim 4-9, wherein the alcohol amine is added to the polymeric solution.

11. Method as claimed in claim 1-9, wherein the alcohol amine is added to the precursor solution.

12. Method as claimed in claim 1-11, wherein the molar ratio of the alcohol amine to the metal alkoxide of formula (1) and/or alkylated metal alkoxide of formula (2) is 0.2 to 3.0, preferably ...

13. Method as claimed in claim 1-12, wherein the polymeric solution comprises an Yttrium compound as a pore growth restricting agent.

14. Method as claimed in claim 13, wherein the Yttrium compound is added to the precursor solution as an Yttrium alkoxide of formula (3)
Y(OCₙH₂ₙ₊₁)₃,
wherein n = 1 to 8, preferably 2-4.

15. Method as claimed in claim 1-14, wherein the dried microporous membrane is fired at a temperature of 350 - 750 °C, preferably of 400 - 600°C.

16. Method as claimed in claim 1-15, wherein the polymeric solution is applied by gel dip coating.

17. Method as claimed in claim 1-16, wherein the support membrane is a mesoporous membrane comprising γ-AL₂O₃, TiO₂ and/or ZrO₂.

18. Ceramic microporous membrane obtainable by the method of claim 1-17.

19. Ceramic membrane comprising a microporous membrane of claim 18 on a support membrane.

20. Use of a ceramic microporous membrane of claim 18 or a ceramic membrane of claim 19 in liquid separation processes.
